(19) Europäisches Patentamt
European Patent Office
Office européen des brevets

(11) **EP 2 639 596 B1**

(12) **FASCICULE DE BREVET EUROPEEN**

(45) Date de publication et mention
de la délivrance du brevet:
**16.11.2016 Bulletin 2016/46**

(51) Int Cl.:
***G01S 1/14*** *(2006.01)*     ***G01S 1/42*** *(2006.01)*
***F41G 7/28*** *(2006.01)*

(21) Numéro de dépôt: **13159068.9**

(22) Date de dépôt: **13.03.2013**

(54) **Objet volant guidé sur faisceaux électro-magnétiques**

Flugobjekt, das über elektromagnetische Strahlenbündel gelenkt wird

Flying object guided by electromagnetic beams

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.03.2012 FR 1200786**

(43) Date de publication de la demande:
**18.09.2013 Bulletin 2013/38**

(73) Titulaire: **Thales**
**92400 Courbevoie (FR)**

(72) Inventeurs:
• **Garrec, Patrick**
**33700 Mérignac (FR)**
• **Cornic, Pascal**
**29820 Guilers (FR)**

• **Kemkemian, Stéphane**
**75014 Paris (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A1- 2 793 885     US-A- 4 501 399**
**US-A- 5 344 099     US-A- 5 831 571**
**US-A1- 2003 227 412     US-A1- 2010 221 015**
**US-B1- 7 193 556**

**Description**

La présente invention concerne le domaine des objets volants en direction d'un objectif. La présente invention concerne plus particulièrement un objet volant en direction d'un objectif guidé sur faisceaux électromagnétiques.

Il est connu dans l'art antérieur, des systèmes d'autoguidage, dans lesquels l'engin volant est capable de se diriger de lui même en direction d'un objectif.

Ces systèmes de guidage autonome mettent généralement en oeuvre des moyens inertiels embarqués, associés à un ensemble de désignation électromagnétique, laser ou infrarouge, pointé dans la direction de l'objectif. Dans un tel cas, le volume de l'électronique embarqué est significatif et impacte directement le coût de l'engin. Il est possible de télécharger dans l'objet volant la position de la cible suivant le système de positionnement par satellites (ou GNSS pour Global Navigation Satellite System) comme par exemple le système GPS, Galiléo ou Glonass et de demander un ralliement de l'objet vers cette position. Ceci présuppose un système GNSS embarqué et un point de ralliement fixe.

Il est également connu des systèmes de guidage télécommandés à partir d'une installation fixe au sol. Ces systèmes utilisent un senseur actif ou passif capable de localiser l'engin volant par rapport à l'objectif. Dans ce cas, il est intéressant d'utiliser la technologie radar en mode actif ou passif, cette technologie permettant un fonctionnement "tout temps". Le mode radar actif est cependant difficilement utilisable quand la surface équivalente des engins mis en oeuvre est faible. D'autre part, il ne permet pas une identification directe de la cible ou désignation. C'est pourquoi on utilise plutôt dans ce cas un émetteur embarqué, qui sera localisé par un système de réception adapté, positionné au sol ou lui même embarqué sur un aéronef ou un navire, selon l'application. Cependant, lorsque l'engin vole à une altitude de quelques décimètres ou de quelques mètres au dessus du sol ou de la mer, la localisation en élévation s'avère très délicate, à cause des réflexions. Par ailleurs, la localisation peut également être perturbée dans le plan horizontal et/ou par réflexions latérales sur des objets environnants, comme des constructions humaines par exemple. De plus, classiquement, l'émetteur embarqué ne permet pas la mesure de la distance parcourue, sauf s'il dispose d'une fonction "répondeur". Dans ce dernier cas, le coût et le volume de l'électronique s'accroissent de façon significative.

Enfin, lorsque l'engin tourne sur lui même, il peut être intéressant de connaître l'angle de roulis à chaque instant pour garantir un guidage efficace. Ceci n'est pas accessible avec les dispositifs classiques.

Il est connu dans l'art antérieur, notamment par le brevet américain US 7 193 556, un système permettant de mesurer la position et l'orientation d'un objet en vol par rapport à un système de référence.

Il est également connu par le brevet américain US 5 344 099 un système de guidage sur faisceaux basé sur l'agilité de polarisation.

Un but de l'invention est notamment de corriger les inconvénients précités et en particulier de minimiser pour les objets volant en direction d'un objectif la masse, le volume, la puissance consommée et/ou le coût de l'électronique embarquée.

A cet effet, l'invention a pour objet un objet volant en direction d'un objectif guidé sur faisceaux électromagnétiques tel que décrit dans les revendications.

D'autres particularités et avantages de la présente invention apparaîtront plus clairement à la lecture de la description ci-après, donnée à titre illustratif et non limitatif, et faite en référence aux dessins annexés, dans lesquels :

- La figure 1a représente un exemple de réalisation du guidage d'un objet volant en direction d'un objectif suivant l'invention ;
- La figure 1b représente un autre exemple de réalisation du guidage d'un objet volant suivant l'invention dans le cas d'une illumination par franges interférométriques ;
- La figure 2 représente un exemple de vue en coupe de faisceaux de guidage utilisés pour guidé un objet volant selon l'invention ;
- Les figures 3a et 3b représentent un exemple de faisceaux de guidage en phase utilisés pour guidé un objet volant selon

l'invention respectivement à l'aide de plusieurs antennes et à l'aide d'une antenne lacunaire ;

- La figure 4 représente un exemple de réalisation d'un dispositif d'émission de guidage utilisés pour guidé un objet volant suivant l'invention ;
- Les figures 5a et 5b représentent un exemple de réalisation d'un objet volant suivant l'invention respectivement vu de coté et vu de dos ;
- La figure 6 représente un exemple de réalisation du dispositif de réception et du module de guidage suivant l'invention ;
- La figure 7 représente un exemple de réalisation d'un récepteur de lecture de la position dans les faisceaux de guidage ;
- La figure 8 représente un autre exemple de réalisation d'un récepteur de lecture de la position dans les faisceaux ;

- La figure 9 représente un exemple de représentation graphique de la modulation d'amplitude, en dB, en fonction de la distance, due aux trajets multiples du fait de la réflexion sur le sol ;
- La figure 10 représente un exemple de représentation graphique, en dB, de la différence d'amplitude des signaux reçus en fonction de la distance ;
- Les figures 11 a et 11 b représentent des vues différentes de l'objet volant illustrant les phénomènes de trajets multiples ;
- La figure 12 représente un exemple de localisation de l'objet volant dans un repère circulaire à partir des champs électriques en fonction de la polarisation du signal.

Il convient de noter que les plans horizontaux et verticaux désignent respectivement des plans sensiblement parallèle et sensiblement perpendiculaire au sol, ce dernier étant pris comme référence.

Par convention, le sens de déplacement de l'objet volant sera choisi pour définir l'avant et l'arrière des objets.

Dans la suite de la description, on dira qu'une antenne est " basse " lorsque cette dernière est située dans le demi plan compris entre le sol et un axe horizontal passant par l'axe de révolution du fuselage de l'objet volant.

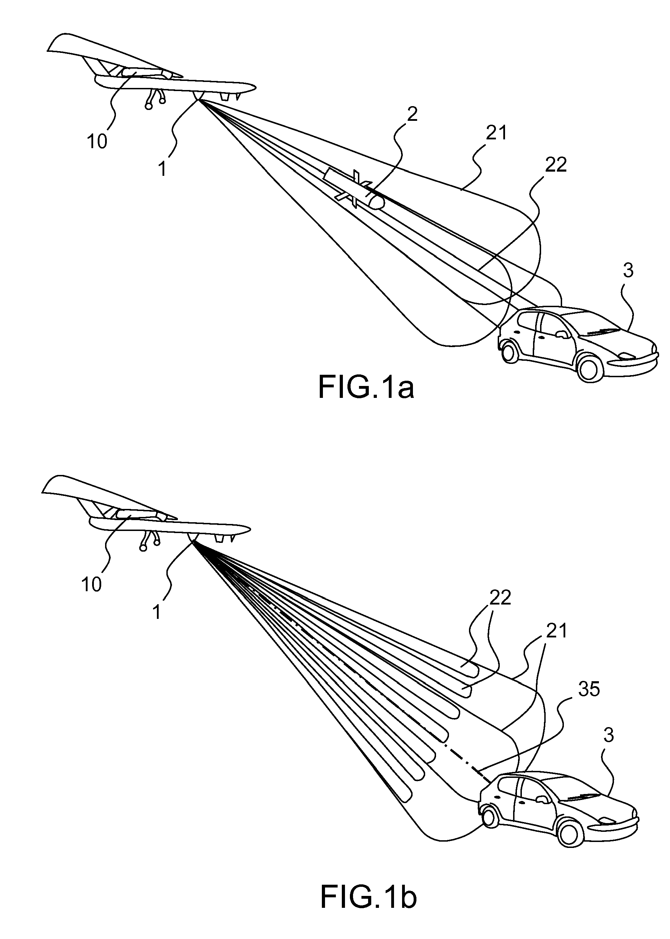

Les figures 1a et 1b représentent des exemples de réalisation d'un guidage d'au moins un objet volant 2 en direction d'un objectif 3.

Un dispositif de guidage 1 par faisceaux électromagnétiques 21, 22 d'au moins un objet volant 2 en direction d'un objectif 3 comprend entre autre un moyen de pointage, un ensemble comprenant au moins trois antennes d'émission 46 et au moins un émetteur fonctionnant par exemple selon une longueur d'onde millimétrique. Chaque émetteur peut comprendre un générateur de forme d'onde délivrant un signal à chacune des antennes d'émission de façon à former les faisceaux de guidage. De façon avantageuse, l'emploi d'une onde de longueur d'onde millimétrique, permet d'obtenir des faisceaux plus fins, plus directifs et donc d'augmenter la précision du guidage. De plus il est connu que pour une même surface d'antenne, une augmentation de la fréquence entraine une augmentation du gain de l'antenne. Il est également connu que les pertes, par exemple par absorption atmosphérique, sont très élevées dans cette bande de fréquence. De façon avantageuse, ces pertes vont permettre une plus grande discrétion du dispositif et donc de diminuer la possibilité de détecter le dispositif de guidage selon l'invention. La finesse des faisceaux ainsi que celle des lobes secondaires permet également d'augmenter la discrétion du dispositif. Bien entendu, le ou les émetteurs selon l'invention ne se limitent pas à cette bande de fréquence et peuvent également fonctionner suivant d'autres longueurs d'onde.

Suivant un mode de réalisation particulier, la fréquence d'émission se situe autour d'une fréquence sensiblement égale à 80 gigahertz.

Suivant une variante de réalisation le dispositif de guidage comprend trois émetteurs identiques et indépendants. Ces émetteurs peuvent être séparés ou bien constituer un seul ensemble physique. De façon avantageuse, afin de limiter le poids et/ou l'encombrement, le ou les émetteurs peuvent être des émetteurs miniatures. De façon préférentielle le ou les émetteurs seront de faible puissance afin de limiter la consommation d'énergie et donc d'augmenter l'autonomie de l'objet volant 2. Chaque émetteur peut alimenter une ou plusieurs antennes par exemple de façon séquentielle. Selon un mode de réalisation préférentiel, le ou les émetteurs génèrent les faisceaux suivant une ou plusieurs polarisations rectilignes.

Le moyen de pointage peut par exemple être un radar, une boule optronique, une caméra jour et/ou thermique comme par exemple une caméra infrarouge ou tout autre système optique ou optoélectronique de pointage équivalent. Ce moyen a pour fonction de désigner, le point d'arrivée ou l'objectif à atteindre par l'objet volant et de " l'accrocher ". Cet objectif 3 ou cible peut être fixe ou mobile. Une fois la cible 3 verrouillée par le moyen de pointage, les faisceaux électromagnétiques 21, 22 sont harmonisées en angle sur la direction de désignation du moyen de pointage. La direction de ces faisceaux est ainsi asservie avec le moyen de pointage de façon à ce qu'ils pointent vers l'objectif 3 et qu'ils soient orientés suivant une droite passant par le moyen de pointage et l'objectif à atteindre par l'objet volant 2. Par la suite, cette droite sera nommée axe de désignation 35. L'harmonisation ou asservissement de l'axe radio électrique, c'est-à-dire l'axe des faisceaux électromagnétiques 21, 22, par rapport à l'axe de visé du moyen de pointage optique, ou axe de désignation 35, est effectuée de façon statique sur la plateforme sur laquelle est monté le moyen de pointage. Suivant un mode de réalisation, les valeurs de correction, c'est-à-dire les biais en azimut ou en élévation, peuvent par exemple être compensés par des cales pelables. Suivant une variante de réalisation, elles peuvent être prises en compte par le dispositif de guidage pour la formation et l'orientation des faisceaux lors du départ de l'objet volant 2. Suivant un autre mode de réalisation, ces valeurs de correction peuvent être transmises au récepteur de l'objet volant 2 à guider comme des paramètres de correction avant le départ de ce dernier.

La ou les antennes d'émission du dispositif de guidage 1 sont réparties sur le moyen de pointage et sont orientées selon un axe identique de façon à pouvoir émettre les différents faisceaux électromagnétiques de façon centré autour d'un axe de désignation 35 dirigé vers la cible.

Chaque faisceau est émis dans des plans différents de façon à pouvoir repérer l'objet volant dans l'espace.

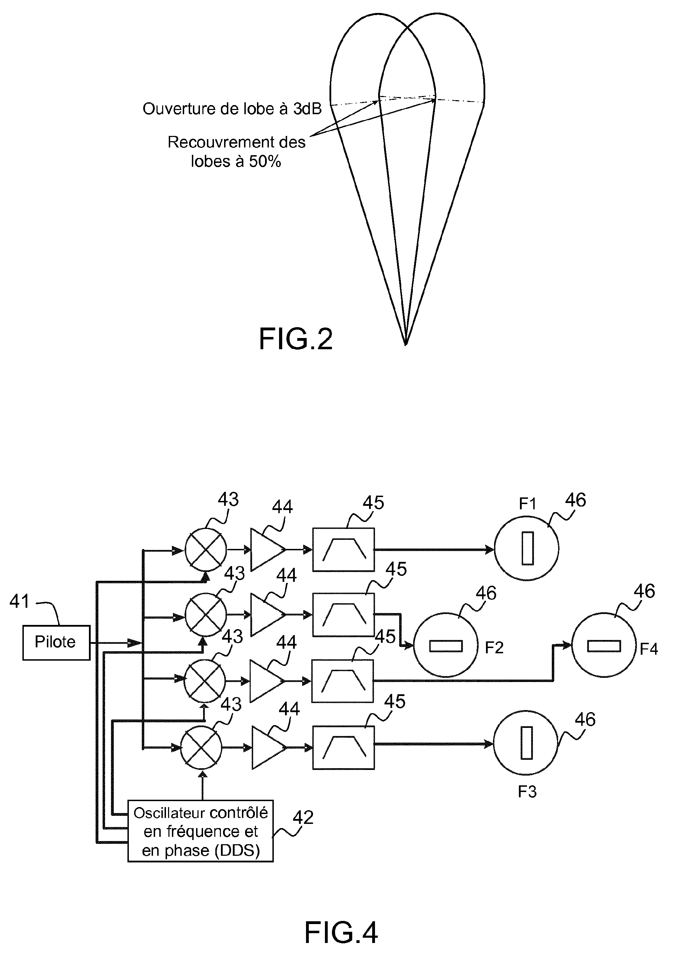

De façon à pouvoir permettre la localisation de l'objet volant 2 à l'intérieur des faisceaux 21, 22 et ainsi guider l'objet volant, chaque faisceau est codé de façon différente. Suivant un mode de réalisation d'une configuration à plusieurs antennes, les angles d'inclinaison de ces antennes sont tels que les faisceaux émis, pris deux à deux, se coupent par exemple à 3dB à la moitié du lobe d'émission. La figure 2 illustre le recouvrement des lobes des faisceaux d'émission à 50% suivant un mode de réalisation d'un guidage de type monopulse d'amplitude. Dans cette représentation, une coupe des faisceaux d'émission de guidage suivant un seul plan est représenté de façon à ne pas alourdir la figure. La même représentation existe suivant les autres plans orthogonaux.

Suivant un mode de réalisation, un système de codage consiste à émettre chaque faisceau avec une fréquence différente. A cet effet, les antennes émettent à des fréquences différentes pour que le récepteur puisse différentier les différents lobes en fréquence. Un autre système de codage peut consister à émettre chaque faisceau avec la même fréquence mais avec des codes de phases différentes. Ainsi la mesure de la différence d'amplitude ou de la différence des signaux codés, par exemple en phase, permet de positionner l'engin dans le faisceau.

Dans d'autres modes de réalisation, les faisceaux sont émis avec la même fréquence mais selon des codes orthogonaux différents. Selon une autre variante de réalisation, les faisceaux sont codés suivant une combinaison de fréquences et de codes orthogonaux différents.

Les différents faisceaux électromagnétiques sont pointés selon la même direction de visée et orientés de façon à ce que les gains de leurs antennes respectives soient identiques pour deux polarisations rectilignes orthogonales.

Le guidage de l'engin volant en direction d'un objectif peut se faire suivant plusieurs stratégies. Une première stratégie de guidage peut consister à illuminer l'objectif à atteindre en utilisant des faisceaux d'ouvertures différentes. La figure 1a illustre un exemple d'un tel mode de réalisation dans une configuration de type monopulse d'amplitude.

Suivant un mode de réalisation préférentiel, la configuration de type monopulse de phase est utilisée. Dans cette configuration, de monopulse de phase, les amplitudes émises sont identiques et les sources élémentaires ou les antennes sont disposées de façon à ce qu'elles fournissent des signaux d'amplitudes identiques quelque soit la direction considérée de la cible 3 ou du point désigné. Les phases relatives des signaux mesurés dans chaque voie sont fonction de la direction de l'axe de désignation. Si nous appelons $\alpha$ l'angle par rapport à cet axe, $\phi$ la phase, $\lambda$ la longueur d'onde du signal et d la distance par rapport au dispositif de guidage 1, on a la relation :

$$\Delta\phi = 2\pi . d/\lambda . \mathrm{Sin}(\alpha)$$

La mesure de la phase du signal reçu par les antennes de réception de l'objet volant 2 permet donc d'obtenir l'angle de la trajectoire de l'objet volant 2 par rapport à l'axe de désignation 35 du dispositif de guidage 1.

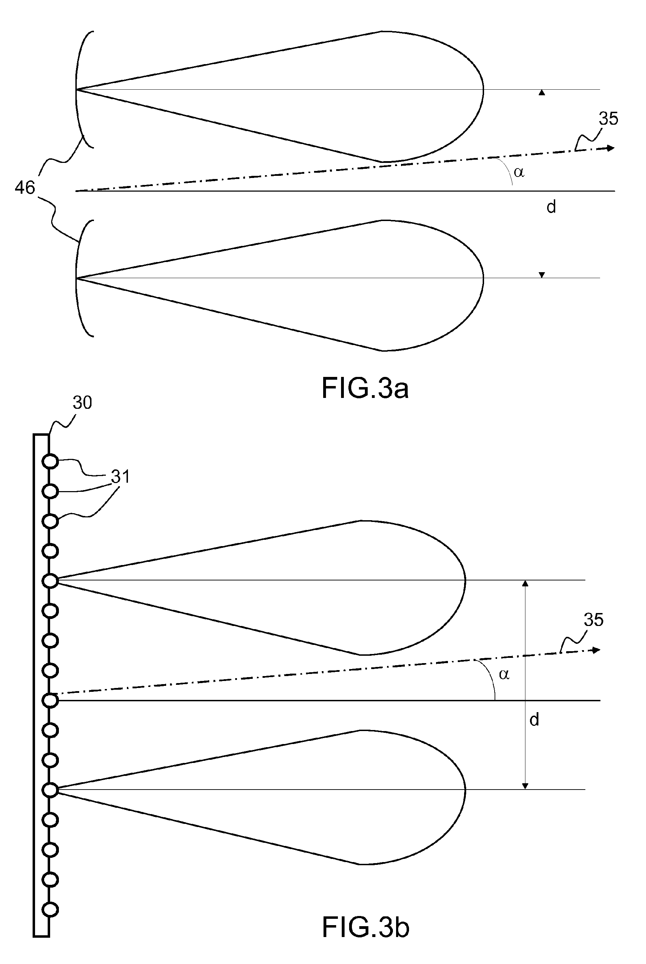

L'utilisation d'un réseau ambigu permet d'obtenir des lobes de réseaux et par exemple une levée d'ambigüité en amplitude permettra la sélection du bon réseau. La figure 3b illustre à travers un exemple de réalisation, un tel mode de guidage.

De façon à guider l'ensemble comprenant au moins un objet volant 2, le ou les émetteurs du dispositif de guidage 1 génèrent des signaux à la ou les antennes 46 afin d'émettre un ensemble un ensemble de faisceaux comportant au moins trois faisceaux électromagnétiques de guidage distincts.

En référence à la figure 1a, le dispositif de guidage 1 émet des faisceaux grossiers 21 et des faisceaux fins 22 pointant tous dans la même direction. La solution proposée consiste à avoir un faisceau large 21 pour faire un pré guidage de l'objet volant 2 vers le centre dudit faisceau large puis un faisceau fin permettant d'obtenir la précision finale pour un guidage vers l'objectif 3.

Suivant une variante de réalisation, les faisceaux larges pourront être alternés avec des faisceaux fins.

Dans la configuration de type monopulse d'amplitude, chaque faisceau 21, 22 est émis avec des gains différents pour une direction donnée et sont issus du même centre de phase. Les faisceaux grossiers 21 sont utilisés dans la phase initiale pour guider l'objet volant et le positionner dans les faisceaux plus fins 22. Les faisceaux fins 22 sont ensuite utilisés par l'objet volant 2 dans sa phase de vol pour se diriger vers l'objectif 3. Ces faisceaux 22 ont pour but de réaliser un guidage fin. La localisation de l'objet volant 2 à l'intérieur des faisceaux est faite naturellement par l'objet lui même, en effectuant une séparation par filtrage adapté aux signaux reçus de chaque faisceau de l'illuminateur 1, puis par une pesée des amplitudes des faisceaux grossiers 21 puis des faisceaux fins 22.

En référence aux figures 3a et 3b, suivant une variante de réalisation, le même principe est utilisé avec une configuration de type monopulse de phase. Dans ce cas, les faisceaux grossiers 21 et fins 22 ont le même gain quelque soit la direction considérée et c'est la phase d'arrivée qui change en fonction de la direction considérée. Pour cela, le centre de phase à l'émission est différent pour chaque faisceau. Les sources élémentaires 31 ou les antennes 46 d'émission du dispositif de guidage 1 sont disposée de façon à ce qu'elles fournissent des signaux d'amplitude identiques quelque soit la direction considérée de la cible 3 ou du point désigné.

Les phases relatives des signaux mesurés dans chaque voie sont fonction de l'angle par rapport à la direction de l'axe de désignation 35. La différence de phase $\Delta \phi$ entre la trajectoire de l'objet volant 2 et l'axe de désignation 35, est donnée par la relation :

$$\Delta \phi = 2\pi^* d/\lambda \; Sin(\alpha)$$

où $\alpha$ représente l'angle par rapport à l'axe de désignation, d la distance et $\lambda$ la longueur d'onde du signal.

La mesure de la phase permet donc d'obtenir l'angle par rapport à l'axe 35, la localisation de l'objet volant à l'intérieur des faisceaux peut donc se faire par des pesées multiples sur les phases des signaux des faisceaux de guidage.

Suivant un mode de réalisation préférentiel, trois faisceaux grossiers 21 et trois faisceaux fins 22, par exemple émis en équilatéral, sont nécessaires pour une bonne localisation de l'objet volant 2. Afin d'améliorer la précision et/ou pour des raisons de redondance, un nombre plus élevé de faisceaux peut être utilisé.

Afin de minimiser la consommation du dispositif de guidage 1, un management de puissance peut être réalisé lors de l'émission des faisceaux 21, 22. Pour cela le dispositif de guidage 1 sur faisceaux électromagnétiques peut comporter des amplificateurs pilotés en amplitude. Par exemple, les faisceaux 21, 22 peuvent être émis avec une puissance plus ou moins élevée suivant la distance de l'objectif ou de la cible 3 à atteindre. De plus, de façon avantageuse, cela permet au dispositif de guidage 1 d'augmenter sa discrétion et donc de réduire sa probabilité de détection.

Les faisceaux grossiers 21 n'étant utilisés que lors de la phase initiale du guidage de l'objet volant, ils peuvent être émis avec une puissance inférieure à celle des faisceaux fins. En effet les faisceaux grossiers servent à guider l'objet volant vers les faisceaux fins et une fois ces faisceaux ralliés, il est sensé ne pas s'en éloigner, dans cette phase, ils ne sont donc d'aucune utilité.

La figure 1b illustre une autre solution de guidage sur faisceaux électromagnétiques consistant à illuminer la cible en émettant des tranches d'interférométrie ambigües. Afin de simplifier la représentation, cette figure montre les franges telles que vues suivant un seul plan. Une même représentation des franges d'interférence existe suivant un autre plan, perpendiculaire à ce dernier, émises par deux émetteurs séparés préférablement de la même distance.

Pour cela, l'émission peut être réalisée par des antennes lacunaires 30 émettant un réseau de pinceaux très fins 22, chacune à des fréquences différentes. Les pinceaux 22 émis par chaque antenne ayant tous la même fréquence, le résultat de la mesure faite par le récepteur est totalement ambigu. L'émetteur sait très précisément se positionner à l'intérieur de chaque pinceau fin 22 sans savoir dans lequel il est situé. Pour lever cette ambigüité, des faisceaux grossiers 21 sont émis. Le récepteur peut ainsi, se positionner parmi les différents pinceaux en effectuant une pesée sur les amplitudes et/ou sur les phases des signaux des faisceaux grossiers 22, selon que la technique utilisée à l'émission est discriminante en phase, en amplitude ou suivant une combinaison des deux.

Un avantage de cette solution est qu'elle permet de connaitre avec précision la position de l'objet volant 2 dans l'ensemble du faisceau grossier 21. Dans la configuration précédemment décrite et représentée figure 1a, le faisceau grossier 21 présentait en son centre un faisceau fin 22. Dans cette configuration la précision obtenue n'était que celle du faisceau large. L'augmentation de la précision n'était obtenue que lorsque l'objet volant pénétrait dans le faisceau fin 22. Avec cette nouvelle configuration, une précision fine est obtenue sur tout le volume du faisceau grossier 21.

Afin de faire une localisation suivant les trois axes, le réseau d'émission comprend au moins trois émetteurs cohérents séparés de plus d'une demi longueur d'onde chacun et émettant à des fréquences différentes. Ceci permet d'avoir des franges d'ambiguïté.

L'utilisation de plus de trois émetteurs permet d'augmenter la précision. Une telle configuration permet également d'augmenter la fiabilité et la sécurité de fonctionnement en offrant une redondance des signaux.

Une solution de guidage peut également être obtenue avec des lobes d'émission ambigus pour les pinceaux fins ou par des déphaseurs connus par l'homme du métier sous le mon de " true time delay permettant de " tilter " le lobe de la valeur souhaitée.

En référence à la figure 4, un exemple de réalisation de la partie émission du dispositif de guidage 1 utilisé pour guider un objet volant 2 en direction d'un objectif suivant l'invention est présentée. Dans ce mode de réalisation, le dispositif de guidage comporte quatre antennes 56 et émet quatre faisceaux avec code en polarisation rectiligne.

La partie émission du dispositif 1 comprend un pilote 41 et un oscillateur contrôlé en fréquence et en phase 42 ou synthétiseur digital de fréquence direct (DDS pour Direct Digital Synthesis suivant le terme anglo-saxon). Les signaux issus de ces deux dispositifs 41, 42 sont ensuite mélangés à l'aide de mélangeurs 43. Les signaux en sortie de chaque mélangeur 43 sont ensuite amplifiés par un amplificateur 44 et filtrés à l'aide d'un filtre passe bande 45. Après traitement, les signaux sont envoyés vers des antennes 46 pour être émis. Dans cet exemple, deux antennes fonctionnent en polarisation horizontale et deux en polarisation verticale. Bien entendu, cet exemple n'est nullement limitatif et un système en polarisation slant comme par exemple suivant des angles de +45°et -45°est possible.

Dans cette configuration les fréquences d'émission peuvent être distinctes ou identiques. Dans le cas où les fréquences sont identiques, les signaux sont émis avec des codes de phases différents de façon à différencier les faisceaux.

Il est à noter que les deux polarisations à l'émission sont liées à la volonté d'avoir de la redondance. Une autre solution mono polarisation est possible mais moins robuste.

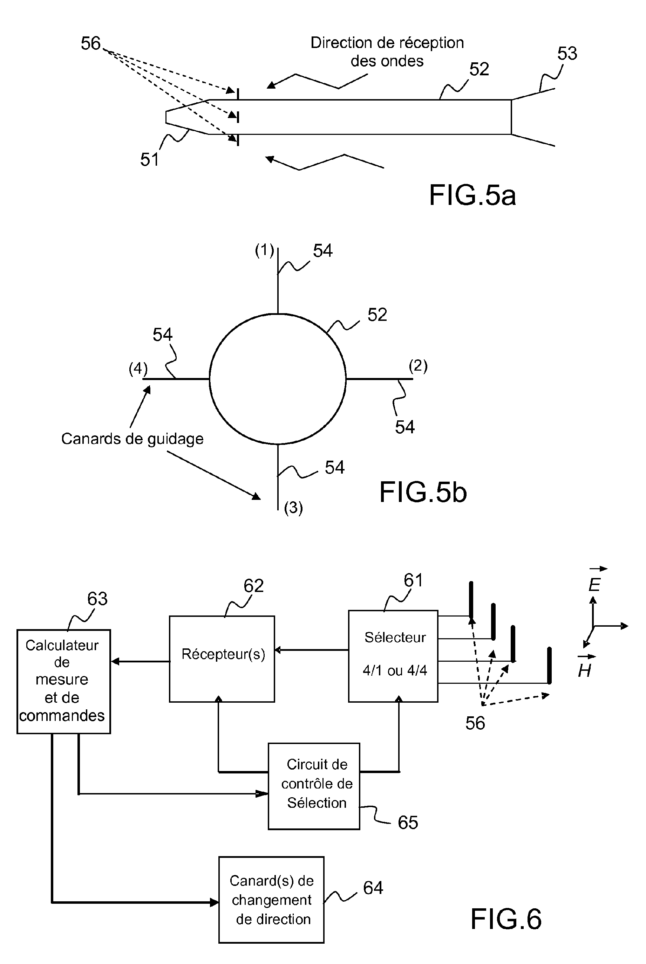

Les figures 5a et 5b représentent respectivement une vue de coté et de dos d'un exemple de réalisation d'un objet volant 2 en direction d'un objectif suivant l'invention.

Dans cet exemple l'objet volant 2 a un fuselage 52 de forme sensiblement cylindrique avec à une extrémité une tête ou pointe avant 51 de forme sensiblement conique. Bien entendu d'autres formes de pointe avant sont possibles comme par exemple une forme sensiblement tronconique ou une forme d'ogive. Cet objet volant 2 comporte un propulseur 53 placé à l'arrière de l'objet 2, c'est à dire à l'extrémité opposée de la pointe avant 51 et quatre ailettes de guidage 54 ou canards de guidage. Chaque ailette de guidage 54 passe par un axe sensiblement perpendiculaire à l'axe de révolution du fuselage 52. De façon générale, l'objet volant 2 comporte au moins une ailette de guidage 54. L'orientation de la ou les ailettes de guidage 54 est commandé par un module de pilotage comprenant des moyens de calcul et apte à établir des ordres de commande, en direction de la ou les ailettes de guidage, permettant de modifier la trajectoire de l'objet volant 2 de façon à guider ce dernier.

L'objet volant 2 comporte également, sur l'avant de son fuselage 52, quatre antennes 56 de réception réparties uniformément autour du fuselage 52 et orientées de façon sensiblement perpendiculaire à l'axe de révolution du fuselage. Ces antennes 56 de réception sont orientées de façon à pouvoir recevoir un signal provenant de l'arrière de l'objet volant 2. De façon préférentielle, les antennes 56 de réception sont placées à l'arrière des ailettes de guidage 54. Suivant un premier mode de réalisation, les quatre antennes 56 sont connectées chacune à un récepteur 62. Suivant une variante de réalisation un récepteur 62 est relié à plusieurs antennes 56, les signaux reçus étant par exemple traités après multiplexage.

Suivant un mode de réalisation particulier, la ou les ailettes de guidage 54 sont rétractables. Avant le tir de l'objet volant 2, les ailettes 54 sont rentrées dans des évidements prévus dans le corps du fuselage 52. Après le tir, ces ailettes 54 sont déployées hors de leur logement de façon à pouvoir guider l'objet volant 2 dans sa phase de vol.

En référence à la figure 5b, suivant un mode de réalisation, l'objet volant 2 possède deux paires d'antennes 56 de réception disposées autour de son fuselage perpendiculairement deux à deux et chacune perpendiculairement à l'axe de révolution du fuselage. Ces antennes 56 sont orientées vers l'arrière de façon à recevoir les signaux provenant du dispositif de guidage 1 et de façon préférentielle disposée à l'arrière des ailettes de guidage. Les antennes de réception sont polarisées suivant une polarisation rectiligne, une paire d'antennes diamétralement opposées suivant une polarisation horizontale et une seconde paires suivant une polarisation verticale. Dans la suite de la description, dans le cas où l'objet volant possède deux paires d'antennes de réception polarisées suivant deux polarisations rectilignes différentes, les antennes impaires 1 et 3 seront polarisées suivant une polarisation verticale et les antennes paires 2 et 4 suivant une polarisation horizontale. Bien entendu, les numéros des antennes d'émission du dispositif de guidage suivant l'invention suivent la même règle. De même, On notera F1 à F4 les fréquences respectives des signaux émis par les antennes d'émission 1 à 4.

Suivant un mode de réalisation particulier, l'objet volant 2 possède deux antennes de réception 56 disposées autour de son fuselage 52 suivant un axe perpendiculaire à l'axe de révolution du fuselage 52, les deux antennes 56 étant diamétralement opposées.

De façon générale, le module de réception de l'objet volant 2 comporte au moins un récepteur embarqué et au moins une antenne. La configuration avec une seule antenne est possible du fait que l'objet volant est animé d'un mouvement de rotation sur lui même au cours de son déplacement. Dans le cas d'un récepteur unique, la vitesse de commutation devra être adaptée à la vitesse de rotation de l'engin à guider. Le module de réception permet un décodage des signaux émis par le dispositif de guidage permettant ainsi une localisation naturelle de l'objet volant dans les différents faisceaux émis.

De façon avantageuse, les antennes de réception 56 de l'objet volant 2 sont disposées de façon à ce que le signal reçu par au moins une d'entre elles ne soit pas altéré par des réflexions sur le sol ou sur un obstacle latéral sur un côté de la trajectoire de l'objet volant quelle que soit la position de l'objet volant. Il est à noter que l'objet volant 2 étant en rotation sur lui même, les signaux sont reçus périodiquement par les différentes antennes 56 selon la même géométrie, ce qui permet de réaliser un étalonnage des gains des chaînes de réception associées à chacune de ces antennes.

Suivant une particularité de l'invention, l'objet volant 2 établit sa propre localisation angulaire en site et en gisement par goniométrie sur les signaux reçus par sa ou ses antennes 56, à partir des faisceaux de signaux émis par chacune des sources d'émission du dispositif de guidage 1. Pour effectuer sa localisation, l'objet volant 2 comprend au moins un récepteur 62 d'onde fonctionnant par exemple suivant une longueur d'onde millimétrique, sa commande, un circuit de contrôle de réception 65 et d'étalonnage, un répartiteur 61 et de façon préférentielle, quatre antennes en polarisation rectiligne (par exemple deux en polarisation horizontale et deux en polarisation verticale) conformément au synoptique de principe de la figure 6. Comme vu précédemment, du fait de la rotation de l'objet volant, une configuration avec au moins une antenne de réception 56 est possible.

Le ou les récepteurs 62 fonctionnent en onde millimétrique dans une bande de fréquence correspondant au dispositif d'émission. Typiquement, la fréquence d'émission est de l'ordre de 80 GHz.

Par la lecture de ces informations, le récepteur connaît sa position et site et en gisement par rapport à la trajectoire linéaire reliant le moyen de désignation ou pointage à la cible 3 ou au point désigné.

L'objet volant est donc piloté, dirigé par les faisceaux et en même temps, l'objet volant lit les informations des faisceaux pour se repérer et aller vers le centre des faisceaux pour se diriger vers l'objectif pointé par le désignateur. Un avantage de ce mode de réalisation est que plusieurs objets volant 2 peuvent être guidés en même temps sur les mêmes faisceaux. En effet, selon l'invention il n'y a pas de véritable communication directe entre l'émetteur et le récepteur de l'objet volant 2. Les faisceaux agissent comme une sorte de couloir ou d'entonnoir dans lequel les objets volants 2 s'autodirigent vers le centre en lisant les informations des faisceaux. De ce fait la charge de travail pour l'émetteur est la même quel que soit le nombre d'objet volant 2 à guider. Selon l'invention, la charge de guidage est assurée par les récepteurs embarqués dans les objets à guider 2.

En référence à la figure 6, le circuit de contrôle de réception 65 a pour but d'aiguiller le sélecteur quatre voies vers une ou quatre voies vers quatre de façon à ce que diverses chaînes de réception puissent recevoir le même signal. De façon avantageuse, ceci peut être utilisé, par exemple, pour étalonner le gain de chaque voie.

Suivant un exemple de réalisation, le circuit de sélection peut être un circuit de commutation à une entrée et à quatre sorties, connu de l'homme de l'art sous l'appellation SP4T ou Single-Pole Four-Throw (switch) suivant le terme anglo-saxon. Une variante avec un circuit de commutation du type SP2T pour Single-Pole Double-Throw (switch) limitée aux évaluations paires impaires est aussi possible.

En théorie, deux voies situées en opposition, c'est à dire correspondant à des antennes diamétralement opposées donc deux antennes "paires" ou deux antennes "impaires", doivent voir un signal identique par construction. En effet, le but pour les récepteurs "pairs" ou " impairs " est d'avoir le même signal sur les deux voies correspondantes de façon à placer l'objet volant au centre du faisceau.

Suivant un premier mode de réalisation, lors de l'étalonnage, en faisant commuter les deux voies " paires " (ou les deux voies " impaires ") très rapidement et en comparant les valeurs mesurées avant et après commutation, une dissymétrie des voies peut être détectée. Dans ce cas, un ajustement de gain sur une voie peut être réalisé pour tenir compte des différences de gain de la chaîne et compenser cette dissymétrie. De façon préférentielle, et afin de minimiser les coûts, la compensation de l'erreur de gain peut être faite numériquement. En effet, compte tenu de l'application, une compensation analogique de la chaîne n'est pas nécessaire. Bien entendu, cette compensation doit se faire dans toutes les fréquences employées par les couples émetteurs-récepteurs.

Cette vérification de la symétrie de deux voies diamétralement opposées peut également être faite en sélectionnant la même voie en en faisant une mesure simultanée des signaux reçus par une antenne à l'aide de deux récepteurs différents.

D'autres solutions d'étalonnages sont également possibles comme par exemple l'implantation d'un cinquième récepteur servant de référence. En commutant séquentiellement sur les voies 1 à 4 et en mesurant les signaux reçus sur chacune des voies, cet émetteur peut analyser leurs variations relatives par rapport aux signaux mesurés sur la cinquième voie de référence. Cette fonction peut être allouée à une voie qui pseudo aléatoirement sera mise en parallèle avec une autre voie pour étalonner cette dernière.

Les appairages critiques étant les voies " paires " entre elles et les voies " impaires entre elles, il n'est pas besoin de compenser les voies " paires " avec les voies " impaires ". De plus, les polarisations des voies " paires " étant différentes de celles des voies " impaires ", les valeurs mesurées seront différentes.

En cas d'utilisation d'un code, le décodage participera à l'élaboration de la précision. Les codages permettront de lever les ambiguïtés liées à l'utilisation de fréquences identiques qui seront différenciées par le décodage

Une intégration des valeurs mesurées lors des rotations peut également permettre de faire cet étalonnage.

Suivant une particularité de l'invention l'objet volant 2 est guidé par les différents faisceaux 21, 22 mais utilise également ces faisceaux pour se repérer dans l'espace. Les moyens de calcul du module de pilotage de l'objet volant 2 peuvent calculer ses paramètres de localisation et de guidage à partir des informations véhiculées par les faisceaux 21, 22 de guidage. Les moyens de calcul du module de pilotage peuvent par exemple calculer les paramètres de localisation angulaire en élévation et en azimut de l'objet volant 2 par écartométrie deux plans à partir des signaux reçus par les antennes de réception 56. De façon préférentielle, les moyens de calcul rejetteront des signaux perturbés par au moins une réflexion avant d'établir les paramètres de guidage et de localisation.

De façon avantageuse, si l'objet volant 2 est capable de savoir où il est dans l'espace en utilisant les informations des faisceaux, une partie des gyroscopes peut être retirée simplifiant et allégeant ainsi la centrale inertielle de l'objet volant 2. Le gain de poids peut par exemple être utilisé pour augmenter l'autonomie de l'objet volant 2 et/ou augmenter le poids de la " charge utile ".

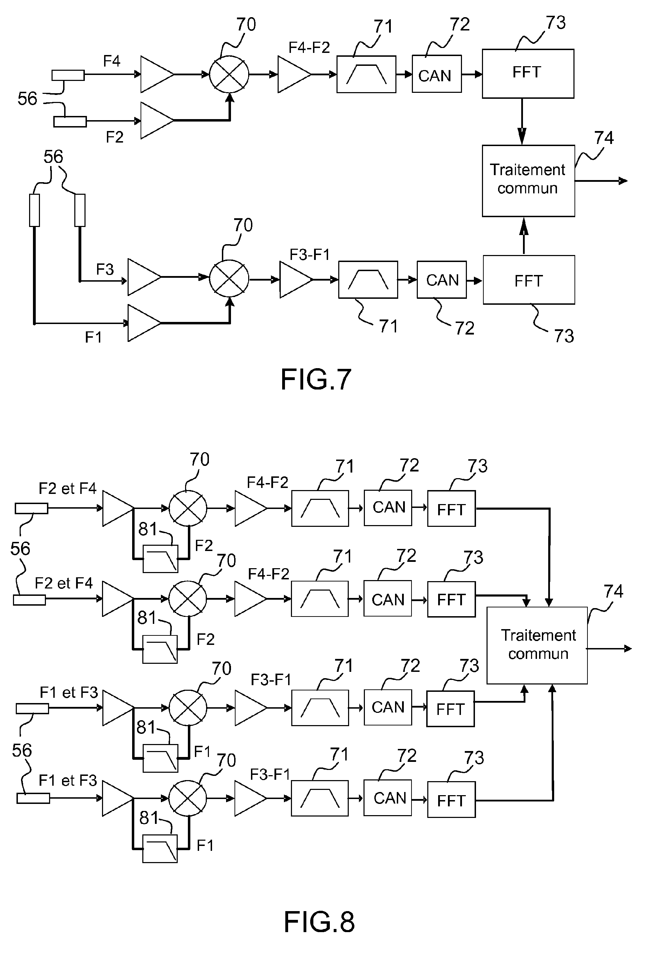

En référence aux figures 7 et 8, dans certains modes de réalisation, chaque récepteur comprend un oscillateur de référence cohérent contrôlé en fréquence, des circuits d'amplification faible bruit, des circuits de filtrage, un mélangeur et des moyens d'échantillonnage, de codage et de traitement de signal basé notamment sur une analyse spectrale par exemple par transformée de Fourrier rapide (ou FFT) ou analogique (ou AFT selon l'abréviation anglo-saxonne).

La figure 7 présente un exemple de réalisation d'un récepteur de lecture de la position dans les faisceaux selon l'invention. Dans cet exemple, le récepteur analyse les valeurs d'amplitude des signaux reçus. Suivant une variante de réalisation, la phase de ces signaux est prise en compte pour les calculs. La mesure de phase est un peu plus compliquée à intégrer bien qu'elle permette d'obtenir des résultats plus précis.

Dans cet exemple, le récepteur utilise une méthode d'autotransposition pour évaluer sa position. Les signaux reçus par les antennes diamétralement opposées (par exemple les antennes 1 et 3 ou 2 et 4 dans une configuration à 4 antennes de réception), donc de même polarisation, sont mélangés entre eux. Un signal est pris comme référence et il est mélangé avec l'autre signal de façon à obtenir l'écart entre ces deux fréquences. La position de l'objet est ainsi identifiée par le décodage des écarts de fréquences entre les signaux reçus par les antennes diamétralement opposées sans avoir besoin de connaître les fréquences exactes de chacun des signaux reçus.

L'écart de fréquence entre les signaux émis aux fréquences F1 et F3 et l'écart de fréquence entre les signaux émis aux fréquences F2 et F4 sont volontairement choisit différents. De plus, les écarts de fréquence seront choisis de façon à ce qu'ils soient significatifs par rapport aux possibilités des moyens de filtrage 71 des récepteurs et aux performances des mélangeurs 70. Les fréquences seront choisies de façon à ce qu'elles ne soient pas trop éloignées et que leur différence permette d'utiliser un filtre 71 et un convertisseur analogique numérique (CAN) 72 à bas coût.

Suivant un mode de réalisation, le signal d'amplitude la plus élevée sera injecté dans l'entrée FI (Fréquence Intermédiaire) du mélangeur 70 et les raies des produits de mélange seront analysées par une analyse fréquentielle 73. Cette analyse pourra être réalisée par exemple par transformée de Fourrier rapide (FFT pour Fast Fourrier Transform selon l'abréviation anglo-saxonne), par transformée de Fourrier analogique (AFT pour Analogic Fourrier Transform selon l'abréviation anglo-saxonne) ou toute autre méthode de passage du domaine temporel au domaine fréquentiel. La mesure des amplitudes relatives et/ou des phases relatives entre les signaux permet à l'objet mobile de se localiser dans les faisceaux reçus. La trajectoire de ces faisceaux étant asservie à la visée optique, le guidage est naturellement effectué.

De façon avantageuse ce mode de réalisation n'utilise aucun oscillateur local comme par exemple un quartz ou un générateur de fréquence. De ce fait, aucun générateur de fréquence précis et/ou stabilisé mécaniquement, par exemple pour résister aux accélérations importantes au décollage, n'est nécessaire. Ceci permet de réduire le poids et le coût de l'objet volant 2. Cette solution permet également de s'affranchir du problème de non démarrage de l'oscillateur local lors du départ de l'objet volant. Les problèmes de stabilité et de complexité des oscillateurs libres se retrouvent dans la plateforme de guidage et non au sein de l'objet volant, ce qui diminue les contraintes d'intégration dans ce dernier.

Comme on ne prend en compte que les différences de fréquence, les signaux analysés ont des fréquences relativement faibles, typiquement des fréquences de l'ordre de la dizaine ou centaine de Méga Hertz, de ce fait, un convertisseur analogique numérique 72 bas de gamme peut suffire pour les calculs ce qui permet de simplifier le circuit des récepteurs et d'en réduire le coût.

La figure 8 présente une variante de réalisation dans laquelle l'auto transposition à retard est utilisée. Les deux signaux de même polarisation, par exemple les deux signaux émis en polarisation horizontale à la fréquence F2 et F4 sont reçu par la même antenne 56. Un filtre 81, par exemple passe haut, sépare le signal à la fréquence basse et le retarde. Ce signal, à la fréquence basse, est ensuite mélangé à l'autre signal reçu dans un mélangeur 70. On obtient ainsi, en sortie de mélangeur 70 un signal mélangé à la fréquence F4-F2 qui sera ensuite traité comme dans le mode de réalisation précédent. Dans cette configuration, la fréquence basse est utilisée pour démoduler la fréquence haute mais des combinaisons différentes sont aussi possibles.

De façon avantageuse, cette solution permet une redondance des signaux.

Du fait de la rotation de l'objet volant, l'utilisation d'une seule antenne et d'une seule voie de réception est possible. Ceci permet, en utilisant la rotation de l'objet, un positionnement dans les deux axes. Le temps de rafraichissement de l'information dépend, dans ce cas, de la vitesse de rotation. La mesure de la rotation de l'objet volant est obtenue par mesure de l'amplitude des signaux reçus et par détermination du maximum de ces signaux.

Bien que moins précise et moins redondante que les solutions précédentes, cette configuration est la plus économique. Elle est à considérer en fonction des critères de fiabilité et des performances de guidage souhaités et en fonction de la vitesse de rotation de l'engin. En fonction du mode de réalisation, le dispositif de réception peut comprendre plus de deux récepteurs, en particulier pour détecter et rejeter les signaux perturbés par les réflexions par exemple sur le sol, le relief ou sur les murs ou tout autre obstacle.

La fonction d'auto transposition peut aussi être remplacée par un oscillateur contrôlé en fréquence, associé à au moins un filtrage adapté à la fréquence ou au code attendu, qui lui même peut être commun aux récepteurs. Cependant, compte tenu de l'accélération au départ de l'objet volant, le générateur devra être stabilisé mécaniquement ce qui a pour conséquence d'augmenter la complexité du système, son volume et surtout son coût. Le codage peut être un codage en fréquence et/ou un codage en phase. Dans ce cas, un système de code de phases orthogonales entre eux peut être employé.

L'émetteur du dispositif de guidage émet les faisceaux de guidage en direction de la cible, cependant il existe des pertes ou fuite de signaux, par exemple dues aux lobes secondaires. Avant séparation de sa plateforme de lancement, l'objet volant est proche de cet émetteur, ses antennes peuvent donc capter les pertes de signaux par exemple les pertes par les lobes diffus, les lobes secondaires etc. De façon avantageuse, les signaux captés peuvent être utilisés pour une étape d'initialisation. Les fuites de signaux captées par les antennes de l'objet volant peuvent être utilisées pour vérifier le bon fonctionnement du récepteur de l'objet volant ou faire des fonctions d'auto test ou " test de bon fonctionnement". Par exemple, à l'intérieur du logement de l'objet volant et avant sa séparation de la plateforme de lancement, un premier test peut consister à vérifier que le récepteur de l'objet volant capte bien les signaux émis par le dispositif de guidage.

Ces fuites de signaux peuvent être utilisées par l'objet volant pour " s'accrocher en fréquence et en phase sur le générateur du dispositif de guidage. Une fois les fréquences de guidage captées, le correcteur de fréquence du récepteur de l'objet volant peut accorder les fréquences. Ainsi, après séparation de sa plateforme de lancement, le récepteur de l'objet volant pourra être accroché en fréquence et en phase sur le générateur du dispositif de guidage.

Suivant un autre mode de réalisation, ces fuites peuvent être utilisées par l'objet volant dans une phase d'initialisation pour effectuer une mesure des fréquences de battement Fb(0)=|F2-F1| ou Fb(0)=|F4-F3|, alors que la vitesse de l'objet volant Vr est encore nulle. Cette mesure pourra par exemple être utilisée ultérieurement pour mesurer la vitesse Doppler. Ces mesures d'écarts de fréquence peuvent être stockées dans une zone mémoire de l'objet volant. Suivant un mode de réalisation particulier, ces mesures sont stockées dans une zone mémoire du traitement commun 74.

Une fois l'objet volant en vol, le récepteur va mesurer la différence de fréquence entre les différents faisceaux. Du fait de l'effet Doppler, cette différence de fréquence est différente de celle lorsque l'objet est immobile. La fréquence de battement à l'arrêt ayant été enregistrée par l'objet volant, le récepteur de ce dernier peut mesurer, par un calcul différentiel, l'effet doppler et donc estimer sa vitesse.

Des informations sur les paramètres relatifs à la trajectoire dans l'espace et la présentation de l'objet volant 2 peuvent être obtenues à partir des faisceaux de guidage 21, 22.

Il peut être intéressant, pour le module de pilotage, de connaître la vitesse radiale de l'objet volant, par exemple, pour doser l'inclinaison des ailettes de guidage lors du déplacement de l'objet volant 2. En effet, pour compenser par exemple un écart de direction le module de pilotage de l'objet volant 2 enverra un ordre de commande de façon à incliner la ou les ailettes de guidage 54 d'un angle plus ou moins élevés suivant que l'objet volant 2 évolue à grande vitesse ou à petite vitesse. La connaissance de la vitesse de l'objet volant peut également servir à vérifier que le vol s'effectue correctement. Cela peut permettre à un module de l'objet volant 2 de détruire ledit objet 2 en vol s'il s'aperçoit, par exemple, que la vitesse est incohérente c'est-à-dire que la vitesse mesurée sort d'une plage de valeurs prédéfinies.

Le calcul de la vitesse peut être obtenu par intégration du temps. L'opération de détection en sortie FFT est répétée à intervalles de temps t réguliers tel que t=kTr (où k représente un entier quelconque et Tr le temps entre deux mesures successives) pendant que l'engin est en mouvement, faisant ainsi apparaître de nouvelles fréquences de battement. D'une façon générale, ces nouvelles fréquences de battement peuvent s'exprimer à l'instant t=kTr par:

$$Fd(kTr) = Fb(0) + Fd(kTr)$$

où Fd(kTr) représente la fréquence Doppler k un entier quelconque, Tr le temps entre deux mesures successives et λ la longueur d'onde utilisée.

Il est à noter que l'expression précédente n'est rigoureusement valide que dans la mesure où l'effet de l'accélération sur les fréquences émises est négligeable. Ceci est le cas lorsque l'on utilise une auto transposition. Dans le cas de l'utilisation d'une synthèse digitale de fréquence (DDS selon le terme anglo-saxon) interne à l'objet volant, l'oscillateur libre devra être stable dans l'axe de lancement de l'objet. Une autre solution peut consister à intégrer dans le calcul la table de compensation de la fréquence en fonction de l'accélération si celle ci est connue.

La vitesse radiale Vr(kTr) de l'engin à l'instant kTr peut alors être déduite de la relation:

$$Fd(kTr) = \frac{Vr(kTr)}{\lambda}$$

De la même façon, l'accélération γr(kTr) à l'instant kTr peut être estimée par

$$\gamma r(kTr) = \frac{Vr((k+1)Tr) - Vr(kTr)}{Tr}$$

Et enfin la distance parcourue à l'instant (k+1)Tr peut être estimée de façon récursive par :

$$Dr((k+1)Tr) = \frac{1}{2}\gamma r(kTr)Tr^2 + Vr(kTr)Tr + Dr(kTr)$$

La vitesse moyenne est estimée en calculant la valeur centrale du spectre de fréquence calculé en sortie FFT, sur une durée Tr. Le résultat de l'analyse spectrale de cette estimation dans l'intervalle de temps [kTr, (k+1)Tr] correspond à l'estimation de la vitesse radiale au temps t= ((k+1/2))Tr/2, Vr((k+1/2))Tr/2)

$$Vr((k+\frac{1}{2})Tr) = \lambda Fd(kTr)$$

Par exemple, pour une longueur d'onde de 4 mm et une durée d'analyse Tr=1,28 ms, la résolution doppler $\Delta Fd=1/Tr$ d'un filtre FFT est de 781 Hz, ce qui correspond à une résolution vitesse $\Delta Vr = \lambda \Delta Fd$ de 3,1 m/s. De façon classique, la précision de l'estimation de la vitesse est sensiblement égale à 1/10 ème de la largeur du filtre d'analyse, soit 0,3 m/s et les temps d'utilisation pour le guidage est estimé à environ 10 secondes. Ceci donne une incertitude de l'ordre de 3 m sur la mesure de la distance radiale.

Dans le cas d'un tir tendu, les angles par rapport au plan horizontal, c'est à dire un plan sensiblement parallèle au sol, sont faibles. De ce fait, cette précision est suffisante pour les besoins de l'objet volant.

Le module de pilotage utilise également les informations des faisceaux de guidage 21, 22 pour calculer une estimation du site de l'objet volant 2.

Les signaux reçus par les différentes antennes de l'émetteur embarqué sont séparés après la transposition dans le domaine fréquentiel par exemple après une transformé de Fourrier rapide. Cette séparation peut être directe si ces signaux correspondent à des sinusoïdes de fréquences différentes. Dans le cas où les signaux ont été codés en phase, en amplitude ou en fréquence, cette séparation est effectuée par exemple par un corrélateur adapté.

En fonction de l'angle de roulis de l'objet volant, à un instant donné, les signaux reçus par au moins une antenne de réception de l'objet volant peuvent avoir été perturbés par des réflexions sur le sol.

Pour une antenne située à la hauteur $h_1$ par rapport au sol et pour un émetteur situé à la hauteur $h_2$ par rapport au sol, la périodicité des franges d'interférence est donnée par la relation:

$$D_i = \frac{2h_1 h_2}{\lambda i}$$

où i est un nombre entier correspondant à la i$^{ème}$ frange et Di correspond à la distance entre le minimum de la i-1 i$^{ème}$ frange et le minimum de la i$^{ème}$ frange.

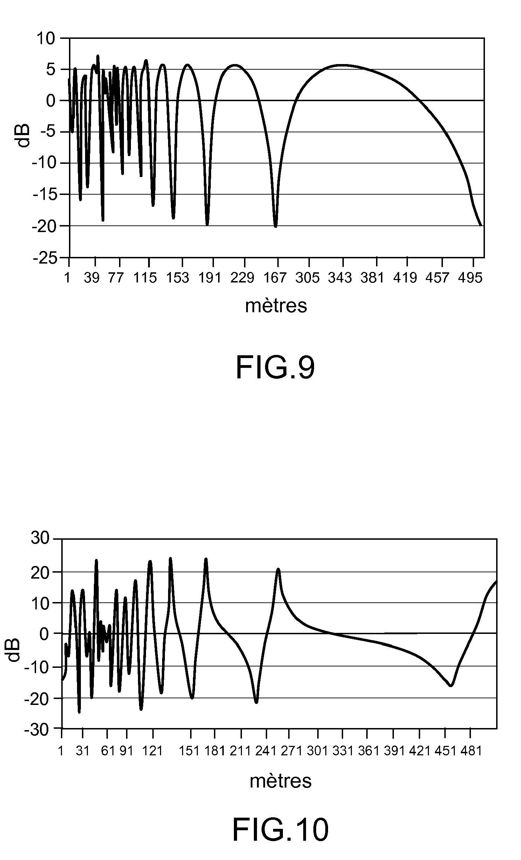

A titre d'exemple, la figure 9 montre, pour un coefficient de réception de 0,9 et une longueur d'onde de 4 mm, l'allure de l'amplitude des franges d'interférences en fonction de la distance dans un cas où l'objet vole à 1 m au dessus du sol, et où le récepteur est lui aussi à 1 m de hauteur par rapport au sol.

Une première solution pour rejeter les signaux ayant subis une réflexion peut consister à vérifier la cohérence d'amplitude du signal reçu au cours du temps par exemple en analysant l'amplitude du signal reçus au cours du temps. En effet, l'engin se déplaçant avec une vitesse très élevée, par exemple supérieure à 100 m/sec, l'amplitude du signal reçu varie très rapidement en fonction du temps, en présence de réflexions sur le sol, en particulier dans les premiers instants suivant la sortie du tube de lancement.

De façon préférentielle, une seconde solution peut consister à utiliser en réception au moins une antenne de polarisation adaptée. La détermination de l'antenne " haute est faite en comparant les amplitudes reçues par les deux antennes diamétralement opposées. On désigne par antenne " haute l'antenne sensiblement perpendiculaire au sol et non en vis à vis avec ce dernier. Cette antenne de réception est prise comme référence car, de par sa position, la probabilité pour qu'elle soit atteinte par un signal ayant subit une réflexion est très faible. En effet, le fuselage de l'objet volant empêche les signaux réfléchis sur le sol d'atteindre cette antenne.

L'estimation du site est alors obtenue par mesure monopulse sur les signaux dont l'amplitude n'est pas perturbée. Une mesure de la vitesse de rotation peut être effectuée et une détermination complète de la position de l'engin par rapport à la verticale est contrôlée. La position est connue à $k\pi$ près, k représentant un entier, et les trajets multiples sont utilisés pour lever l'ambigüité.

A titre d'exemple, la figure 10 présente l'amplitude de la différence des signaux reçus par deux antennes de réception disposée perpendiculairement au sol et diamétralement opposées en fonction de la distance, dans les mêmes hypothèses que précédemment, pour deux antennes d'émission, du dispositif de guidage, espacées de 10 cm en hauteur.

Le module de pilotage peut calculer une estimation de l'azimut de l'objet volant 2 par exemple par un calcul basé sur une information d'écartométrie monopulse.

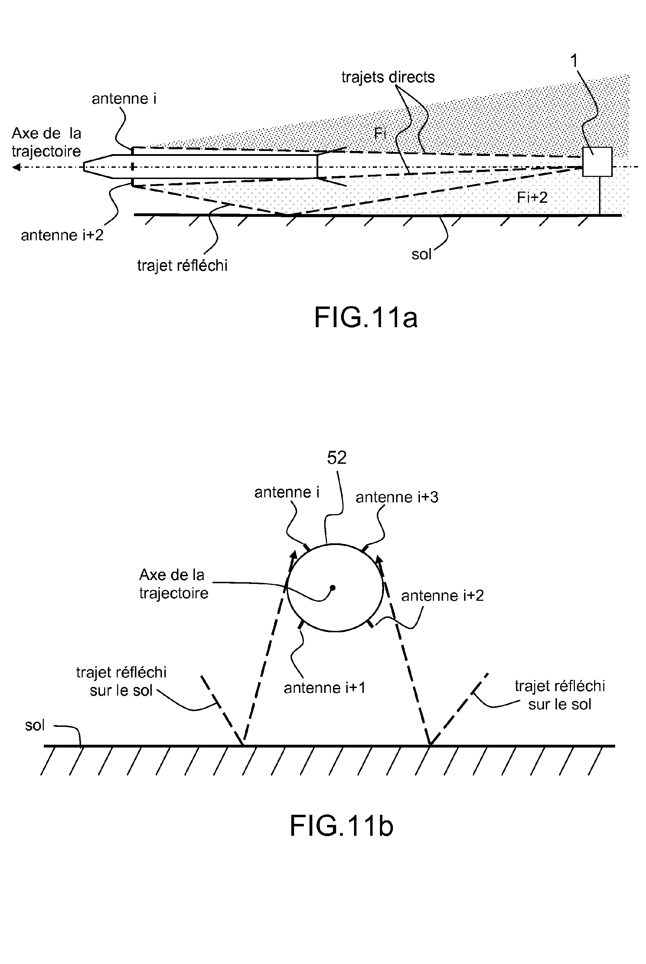

Comme pour la mesure de site, il est possible, en cas de nécessité d'éliminer les mesures qui sont perturbées par des réflexions latérales avec les mêmes méthodes. Ces réflexions latérales peuvent par exemple provenir de réflexion sur des murs ou sur le relief. Un exemple de configuration du dispositif de réception permettant de s'affranchir à la fois des réflexions sur le sol et des réflexions latérales par la diversité de position des antennes est représenté figure 11. Dans cette configuration, les antennes sont disposées de telle façon que le corps du fuselage de l'objet volant agit comme un masque pour au moins une antenne de réception et empêche cette dernière d'être perturbée par les trajets multiples dus aux réflexions latérales ou sur le sol. Pour cela on partira de l'hypothèse que deux réflexions latérales provenant de deux cotés différents ne peuvent pas se produire.

Comme décrit précédemment, en référence à la figure 4, les faisceaux de guidage 21, 22 sont émis à des fréquences différentes et suivant deux polarisations différentes comme par exemple une polarisation horizontale et une polarisation verticale. Au niveau de l'objet volant 2, la mesure de la valeur des amplitudes des signaux reçus aux fréquences F1 et F3 donnent le positionnement par rapport aux faisceaux verticaux et la mesure de la valeur des amplitudes des signaux reçus aux fréquences F2 et F4 donnent le positionnement de l'objet volant 2 par rapport aux faisceaux horizontaux. L'amplitude de ces signaux est maximale lorsque les antennes de réception de l'objet volant sont en phase avec les antennes d'émission.

L'amplitude des signaux reçus sur les antennes 1 et 3 sera maximale lorsque ces dernières seront verticales et nulle lorsqu'elles seront horizontales. De façon analogue, l'amplitude des signaux reçus sur les antennes 2 et 4 sera maximale lorsque ces dernières seront horizontales et nulle lorsqu'elles seront verticales

Lorsque l'objet guidé effectue une rotation de 90°, la mesure de la position effectuée par les antennes peut alors changer, les antennes servant précédemment à mesurer l'élévation se calant naturellement sur la mesure de l'azimut par simple changement de fréquence. Une mesure des amplitudes des fréquences F1 et F3 est effectuée sur des récepteurs différents. Les écarts peuvent alors être analysés. Cette solution est bien sûr valable pour l'azimut.

A titre d'exemple, la figure 10 représente la différence d'amplitude, en dB, entre les signaux reçus par deux antennes de réception diamétralement opposées en fonction de la distance. En théorie, les signaux reçus devraient être identiques, à l'atténuation liés aux multi trajets près. Dans le cas de trajet multiples, seules les antennes " basses " en direction du sol sont susceptibles de subir des perturbations. En effet, le corps du fuselage de l'objet volant agit comme un écran protégeant les antennes " hautes " des réflexions sur le sol comme illustré figures 11 a et 11 b.

Ce principe peut se généraliser, en considérant une génération de pinceaux plus fins, centrés sur l'axe dispositif de guidage / objectif et de fréquence différentes. Une fois l'écart d'amplitude entre les signaux à F1/F3 et F2/F4 minimisé, les récepteurs pourront cette fois se synchroniser sur des fréquences Fp1 à Fp4 (Fp1 à Fp4 représentant les fréquences des faisceaux fins). Le faisceau étant plus fin, le gain sera supérieur et l'auto transposition accrochera naturellement sur la fréquence Fp1 au lieu d'accrocher sur F1 (respectivement Fp3 au lieu de F3). Les algorithmes de calcul sont les mêmes que pour la mesure dans le faisceau grossier. Le passage dans le pinceau précis sera détecté par l'objet guidé à l'aide des codes portés par les diverses fréquences Fp1 à Fp4. L'objectif reste le ralliement de l'objet volant 2 à guider dans le centre du faisceau.

Une autre possibilité peut consister à mesurer les amplitudes des franges d'interférométrie et seules les antennes de l'objet volant recevant des amplitudes identiques seront considérées comme non perturbées par le multitrajet du aux réflexions. Les antennes mesurant des variations d'amplitudes seront au contraire considérées comme étant en présence de trajets multiples.

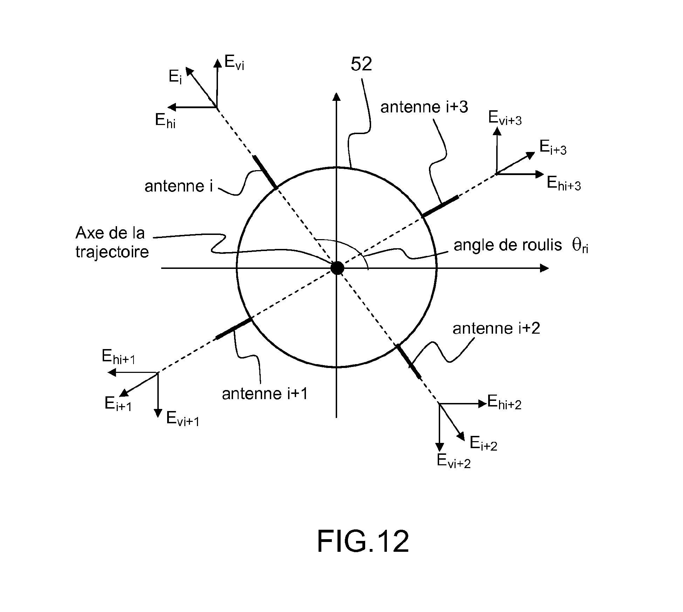

On se réfère maintenant à la figure 12. Comme mentionné précédemment, le dispositif d'émission utilise des antennes en polarisation rectiligne verticale ou horizontale. La polarisation de l'onde reçue par le dispositif de réception comprend pour chaque antenne d'émission une composante en polarisation verticale, et une composante en polarisation horizontale, fonction de l'angle de roulis. Le rapport d'amplitude entre les deux composantes peut permettre au moyen de calcul du module de pilotage d'établir une estimation du roulis.

En prenant comme référence pour l'angle de roulis $\theta_{ri}$ l'angle entre l'axe horizontal perpendiculaire à l'axe longitudinal du fuselage 52 de l'objet volant et l'axe de l'antenne i, le champ électrique $E_i$ rayonné par l'antenne d'émission i comprend une composante verticale $E_{vi}$ et une composante horizontale $E_{hi}$ telles que :

$$E_{hi} = E_i \cos(\theta_{ri})$$

$$E_{vi} = E_i \sin(\theta_{ri})$$

A la réception, à un instant donné t, une antenne polarisée en polarisation horizontale reçoit de l'antenne d'émission i un signal de la forme :

$$R_{hi} = KE_i \cos(\theta_{ri})$$

et une antenne polarisée en polarisation verticale reçoit de la même antenne i un signal de la forme :

$$R_{vi} = KE_i \sin(\theta_{ri})$$

où K représente une constante qui prend en compte les pertes de propagation.

L'angle de roulis peut alors être évalué à π près, par la relation :

$$\theta_{ri} = arctg\left(\frac{R_{vi}}{R_{hi}}\right)$$

$$\theta_{ri} = arctg\left(\frac{R_{vi}}{R_{hi}}\right) + \pi$$

Le même calcul peut être effectué sur les signaux issus des différentes antennes du dispositif d'émission, de façon à consolider la mesure.

Par ailleurs, il est également possible d'estimer la vitesse de rotation de l'engin sur lui même, soit directement en répétant la mesure à intervalles de temps réguliers et en estimant l'angle de roulis parcouru pendant cet intervalle de temps régulier, ou en mesurant la fréquence de rotation par transformée de Fourrier sur l'amplitude des signaux reçus d'une même antenne au cours du temps. L'ambigüité sur la mesure de l'angle de roulis peut alors être levée à partir de la connaissance de l'angle de roulis initial et du sens de rotation de l'objet, en intégrant la vitesse de roulis estimée au cours du temps.

Comme indiqué précédemment, les trajets multiples peuvent aussi être utilisés pour déterminer la position de l'objet volant à guider par rapport au sol.

Il est également possible de mesurer directement la position de chaque antenne de réception lorsque l'objet volant est encore à faible distance, typiquement en dessous de 100 m, puis de compter le nombre de tours sur lui même effectué par l'engin au cours du temps. En effet, à faible distance, les angles mesurés par les récepteurs permettent de différentier les antennes d'émission " hautes ", des antennes d'émission " basses ", la mesure des angles étant significative.

Si on considère un fuselage de section sensiblement circulaire et de diamètre 10 cm tournant autour de son axe de révolution, la position angulaire de deux antennes disposées diamétralement opposées sur le fuselage, diffère de 1 mrd à 50 m. Cet écart angulaire peut être détecté par une base de mesure d'une longueur suffisante, typiquement de l'ordre de 10 cm à 80 GHz. En espaçant les antennes d'émission du dispositif de guidage de 10 cm, la position de chaque antenne de réception d'un objet volant d'un diamètre d'environ 10 cm peut être mesurée lorsque ce dernier est à faible distance.

Une fois l'ambigüité de position initiale levée, par exemple par cette méthode, la déduction de la position instantanée de chacune des antennes peut se calculer en intégrant le nombre de tours en comptant les demi-rotations de l'objet volant.

Cette solution peut aussi être améliorée par la mesure en comparant en différentiel les variations d'amplitude des signaux reçus correspondant aux antennes diamétralement opposées par rapport au fuselage.

En référence aux figures 11a et 11b, lorsque l'antenne de réception est située dans le demi plan entre le sol et un axe horizontal passant par le centre du fuselage de l'objet volant, la probabilité pour que le signal reçu soit affecté par les réflexions sur le sol est très élevée. Par contre lorsque l'antenne est située dans le deuxième demi plan, le signal reçu n'est pas affecté par les réflexions sur le sol, le corps du fuselage masquant ces réflexions. Une fois cette discrimination établie, même temporairement un comptage des demi-tours peut être effectué par la mesure de la polarisation de l'onde reçue.

Suivant une variante de réalisation, l'indétermination peut être levée en appliquant une déviation dans une direction donnée et en corrélant les mesures avec la réaction de l'objet volant. Un avantage de cette méthode est que la levée de l'indétermination est immédiate.

Cette détection peut se faire en instantané si par exemple 4 antennes de réception sont réparties uniformément

**EP 2 639 596 B1**

sur la section du fuselage ou de façon séquentielle lorsque seulement deux antennes diamétralement opposées sont répartie sur la section du fuselage 52. Suivant une variante de réalisation, en fonction de la vitesse de rotation et de la célérité de l'objet volant, en faisant des mesures séquentielles, la détection peut également être réalisée lorsque l'objet volant ne comporte qu'une seule antenne de réception.

Suivant un autre mode de réalisation, l'ambiguïté sur l'angle de roulis peut être levée en disposant dans le fuselage 52 de l'objet volant 2 un capteur embarqué. Ce capteur peut être par exemple de type accéléromètre ou magnétomètre. Le signal délivré par ce capteur permettra d'obtenir une information de position angulaire de faible précision, mais suffisante pour lever l'ambigüité " haut-bas " ou " gauche-droite ".

Ces différents algorithmes d'estimation de la vitesse radiale, de la distance parcourue, du site, de l'azimut et du roulis peuvent être par exemple stockés dans une ou plusieurs zones mémoire de l'objet volant de façon à pouvoir être exécutés par les moyens de calcul du module de pilotage de l'objet volant.

L'objet volant 2 en direction d'un objectif peut faire partie d'un système de lancement d'au moins un engin volant 2 en direction d'un objectif. Ce système peut comprendre un dispositif de guidage d'un objet volant mettant en oeuvre le procédé de guidage décrit précédemment et au moins un objet volant 2 en direction d'un objectif tel que décrit dans la description. Le système peut également comprendre au moins un moyen de support 10 d'au moins un objet volant 2 avant son envoi.

Suivant un premier mode de réalisation, le système de lancement peut être embarqué sur une plateforme mobile comme par exemple une plateforme aéronautique ou maritime ou un véhicule terrestre.

Suivant un autre mode de réalisation, le système peut être portable à dos d'homme. Il peut par exemple être porté par un servant comme par exemple un missile anti aérien tiré à l'épaule (ou MANPADS pour MAN-Portable Air-Defense Systems suivant la terminologie anglo-saxonne) ou sol-sol.

Suivant le type de système de lancement utilisé, l'objet volant 2 peut avoir différents types de trajectoire. La trajectoire peut être rectiligne comme par exemple dans le cas d'un système de lancement embarqué sur une plateforme aéroporté. Suivant un autre exemple, la trajectoire peut être balistique puis rectiligne. Dans ce cas, le guidage de l'objet volant (2) par le dispositif de guidage 1 peut, par exemple, être effectué sur la partie rectiligne de ladite trajectoire.

**Revendications**

1. Objet volant (2) en direction d'un objectif (3) apte à être guidé par un dispositif (1) de guidage sur faisceaux électromagnétiques,
   le dispositif (1) de guidage comprenant un moyen de pointage apte à désigner un objectif (3), au moins trois antennes d'émission (46) et au moins deux émetteurs, les antennes d'émission (46) étant aptes à émettre un ensemble de faisceaux comportant au moins trois faisceaux électromagnétiques de guidage distincts dans des plans différents, l'ensemble de faisceaux étant centré autour d'un axe de désignation (35) et chaque faisceau étant codé différemment de façon à permettre la localisation dudit ensemble d'objet volant (2) à l'intérieur des faisceaux,
   l'objet volant (2) comportant un fuselage (52), au moins une ailette de guidage (54) autour dudit fuselage (52), ladite ailette de guidage (54) passant par un axe sensiblement perpendiculaire à l'axe de révolution du fuselage (52), l'objet (2) comprenant au moins deux antennes de réception (56) orientées suivant un axe sensiblement perpendiculaire à l'axe de révolution du fuselage (52) de l'objet volant (2) et apte à recevoir un signal du dispositif de guidage (1) provenant de l'arrière de l'objet volant (2), un module de réception connecté à la au moins une antenne (56), un module de pilotage connecté au dispositif de réception et apte à orienter la ou les ailettes de guidage (54), le module de réception transmettant au module de pilotage des signaux représentatifs de la correction de trajectoire à effectuer suivant les signaux reçus par la au moins une antenne (56) et en ce que les moyens de calcul du module de pilotage sont aptes à calculer les paramètres de localisation de l'objet volant (2) en effectuant une séparation par filtrage adapté des signaux reçus par la au moins une antenne de réception (56) en provenance de chaque faisceau du dispositif de guidage (1), puis par pesée des amplitudes ou des phases de ces signaux,
   l'objet (2) étant **caractérisé en ce que** le module de pilotage est adapté à détecter et mesurer les fréquences des signaux reçus par les antennes de réception (56) par auto transposition, chaque émetteur du dispositif de guidage (1) comprenant un générateur de forme d'onde délivrant un signal à chacune des antennes d'émission (46) suivant un codage différent.

2. Objet volant (2) selon la revendication 1, **caractérisé en ce que** le module de réception fonctionne suivant une longueur d'onde millimétrique, le groupe d'au moins un émetteur du dispositif de guidage (1) fonctionnant selon une longueur d'onde millimétrique.

3. Objet volant (2) selon une des revendications précédentes, **caractérisé en ce qu'**il possède deux antennes de réception (56) disposées de façon diamétralement opposée autour du fuselage (52), chaque antenne étant apte à recevoir une onde polarisée suivant la même polarisation rectiligne, chaque émetteur du dispositif de guidage (1) générant des faisceaux électromagnétiques suivant une polarisation rectiligne.

4. Objet volant (2) selon une des revendications 1 et 2, **caractérisé en ce qu'**il possède quatre antennes de réception (56), chacune d'entre elles étant disposée autour du fuselage (52) sensiblement perpendiculaire deux à deux et chaque paire d'antenne diamétralement opposée étant apte à recevoir une onde polarisée suivant la même polarisation rectiligne, chaque émetteur du dispositif de guidage (1) générant des faisceaux électromagnétiques suivant une polarisation rectiligne.

5. Objet volant (2) selon une des revendications précédentes, **caractérisé en ce que** la ou les antennes sont montées sur l'arrière de la ou les ailettes de guidage (54).

6. Objet volant (2) selon une des revendications précédentes, **caractérisé en ce que** les antennes (56) sont disposées autour du fuselage (52) de façon à ce que le signal reçu par au moins une d'entre elles n'ai pas subi de réflexions sur au moins un obstacle, le fuselage (52) de l'objet volant (2) agissant comme un masque, pour le signal ayant subi au moins une réflexion, entre la au moins une antenne (56) et le au moins un obstacle.

7. Objet volant (2) selon une des revendications précédentes, **caractérisé en ce que** le module de réception dudit objet volant (2) est apte à rejeter un signal reçu par une antenne (56) et ayant subi au moins une réflexion en analysant les fluctuations de l'amplitude de ce signal au cours du temps.

8. Objet volant (2) selon une des revendications précédentes, **caractérisé en ce que** le module de réception dudit objet volant (2) est apte à rejeter un signal reçu par une antenne (56) et ayant subi au moins une réflexion en analysant les fluctuations de l'amplitude de ce signal par comparaison des signaux reçus d'une même antenne d'émission (46) du dispositif de guidage (1) par deux antennes de réception (56) séparées d'entre elle d'une distance connue.

9. Objet volant (2) selon une des revendications précédentes, **caractérisé en ce que** les moyens de calcul du module de pilotage sont aptes à calculer les paramètres de localisation angulaire en élévation et en azimut de l'objet volant (2) par écartométrie deux plans à partir des signaux reçus par les antennes de réception (56) en provenance des différents faisceaux électromagnétiques (21, 22) du dispositif de guidage (1), après rejet des signaux perturbés par au moins une réflexion.

10. Objet volant (2) selon une des revendications précédentes, **caractérisé en ce que** les moyens de calcul sont aptes à calculer la fréquence Doppler de l'objet volant (2) et à intégrer la vitesse Doppler correspondant à cette fréquence Doppler au cours du temps de façon à calculer la distance radiale parcourue par ledit objet volant (2).

11. Objet (2) volant selon une des revendications précédentes, **caractérisé en ce que** les moyens de calcul sont aptes à calculer la vitesse de roulis et l'angle de roulis dudit objet volant (2), en fonction du temps, par comparaison des amplitudes des signaux reçus par la au moins une antenne de réception (56) suivant deux polarisations orthogonales différentes.

12. Objet volant (2) selon la revendication 11, **caractérisé en ce que** les moyens de calcul sont aptes à calculer la position angulaire des antennes (56) en rotation par interférométrie de façon à lever l'indétermination de position de roulis dudit objet volant (2).

13. Objet volant (2) selon la revendication 11, **caractérisé en ce que** les moyens de calcul sont aptes à calculer l'évolution de l'amplitude des signaux reçus par la au moins une antenne (56) au cours du temps de façon à lever l'indétermination de position de roulis dudit objet volant (2).

14. Objet volant (2) selon la revendication 11, **caractérisé en ce qu'**il comporte un capteur de type magnétomètre ou accéléromètre, et **en ce que** les moyens de calcul sont aptes à lever l'indétermination de position de roulis de l'objet volant (2) grâce au signal délivré par ledit capteur.

15. Objet volant (2) selon une des revendications précédentes, **caractérisé en ce que** sa trajectoire est rectiligne.

16. Objet volant (2) selon une des revendications 1 à 14, **caractérisé en ce que** sa trajectoire est balistique puis rectiligne, le guidage de l'objet volant (2) étant effectué sur la partie rectiligne de ladite trajectoire.

**Patentansprüche**

1. Objekt (2), das in Richtung eines Ziels (3) fliegt und geeignet ist, um durch eine Vorrichtung (1) zur Lenkung über elektromagnetische Strahlenbündel gelenkt zu werden,
   wobei die Vorrichtung (1) zur Lenkung ein Zeigemittel umfasst, das geeignet ist, ein Ziel (3) zu bestimmen, mindestens drei Sendeantennen (46) und mindestens zwei Sender, wobei die Sendeantennen (46) geeignet sind, ein Satz von Strahlenbündeln zu senden, der mindestens drei verschiedene elektromagnetische Lenkungsstrahlenbündel in unterschiedlichen Ebenen umfasst, wobei der Satz von Strahlenbündeln um eine Bestimmungsachse (35) zentriert ist und jedes Strahlenbündel unterschiedlich kodiert wird, so dass die Lokalisierung der Anordnung des Flugobjekts (2) innerhalb der Strahlenbündel ermöglicht wird,
   wobei das Flugobjekt (2) einen Rumpf (52), mindestens eine Leitschaufel (54) um den Rumpf (52) herum umfasst, wobei die Leitschaufel (54) durch eine zur Rotationsachse des Rumpfs (52) im Wesentlichen senkrechten Achse verläuft, wobei das Flugobjekt (2) mindestens zwei Empfangsantennen (56) umfasst, die entlang einer zur Rotationsachse des Rumpfs (52) des Flugobjekts (2) im Wesentlichen senkrechten Achse ausgerichtet sind und geeignet, ein Signal der Lenkungsvorrichtung (1) aus der Rückseite des Flugobjekts (2) zu empfangen, ein mit mindestens einer Antenne (56) verbundenes Empfangsmodul, ein mit der Empfangsvorrichtung verbundenes Lenkungsmodul und geeignet, die Lenkschaufel bzw. Lenkschaufeln (54) zu lenken, wobei das Empfangsmodul an das Lenkungsmodul Signale überträgt, die für die gemäß den durch mindestens eine Antenne (56) empfangenen Signale vorzunehmende Flugbahnkorrektur repräsentativ sind, und wobei die Mittel zur Berechnung des Lenkungsmoduls geeignet sind, die Standortparameter des Flugobjekts (2) zu berechnen, indem eine angepasste Ausfilterung an die durch die mindestens eine Empfangsantenne (56) empfangenen Signale aus jedem Strahlenbündel der Lenkungsvoruchtung (1) durchgeführt wird, gefolgt von einer Messung der Amplituden oder der Phasen dieser Signale,
   wobei das Flugobjekt (2) **dadurch gekennzeichnet ist, dass** das Lenkungsmodul geeignet ist, die Frequenzen der durch die Empfangsantennen (56) empfangenen Signale mittels Auto-Transposition zu detektieren und zu messen, wobei jeder Sender der Lenkungsvoruchtung (1) einen Wellenformgenerator umfasst, der ein Signal an jede der Sendeantennen (46) unter Verwendung einer unterschiedlichen Codierung abgibt.

2. Flugobjekt (2) nach Anspruch 1, **dadurch gekennzeichnet, dass** das Empfangsmodul gemäß einer Millimeterwellenlänge funktioniert, wobei die Gruppe mindestens eines Senders der Lenkungsvoruchtung (1) gemäß einer Millimeterwellenlänge funktioniert.

3. Flugobjekt (2) nach einem der vorhergehenden Ansprüche, **dadurch gekennzeichnet, dass** es zwei Empfangsantennen (56) aufweist, die diametral gegenüberliegend um den Rumpf (52) herum angeordnet sind, wobei jede Antenne zum Empfangen einer polarisierten Welle gemäß derselben linearen Polarisation geeignet ist, wobei der Sender der Lenkungsvorrichtung (1) elektromagnetische Strahlenbündel gemäß einer linearen Polarisation erzeugt.

4. Flugobjekt (2) nach einem der Ansprüche 1 und 2, **dadurch gekennzeichnet, dass** es vier Empfangsantennen (56) aufweist, wobei jede von ihnen um den Rumpf (52) herum im Wesentlichen senkrecht paarweise angeordnet ist und jedes diametral gegenüberliegende Antennenpaar zum Empfangen einer polarisierten Welle gemäß derselben linearen Polarisation geeignet ist, wobei jeder Sender der Lenkungsvoruchtung (1) elektromagnetische Strahlenbündel gemäß einer linearen Polarisation erzeugt.

5. Flugobjekt (2) nach einem der vorhergehenden Ansprüche, **dadurch gekennzeichnet, dass** die Antenne bzw. Antennen auf der Rückseite der Leitschaufel bzw. Leitschaufeln (54) angebracht ist bzw. sind.

6. Flugobjekt (2) nach einem der vorhergehenden Ansprüche, **dadurch gekennzeichnet, dass** die Antennen (56) um den Rumpf (52) herum so angeordnet sind, dass das durch mindestens eine von ihnen empfangene Signal keinen Reflexionen auf mindestens einem Hindernis ausgesetzt ist, wobei der Rumpf (52) des Flugobjekts (2) wie eine Maske für dasjenige Signal wirkt, das mindestens einer Reflexion, zwischen der mindestens einen Antenne (56) und dem mindestens einen Hindernis ausgesetzt wird.

7. Flugobjekt (2) nach einem der vorhergehenden Ansprüche, **dadurch gekennzeichnet, dass** das Empfangsmodul des Flugobjekts (2) geeignet ist, ein durch eine Antenne (56) empfangenes und mindestens einer Reflexion ausgesetztes Signal zurückzuweisen, indem die Amplitudenfluktuationen dieses Signals im Zeitverlauf ausgewertet werden.

8. Flugobjekt (2) nach einem der vorhergehenden Ansprüche, **dadurch gekennzeichnet, dass** das Empfangsmodul des Flugobjekts (2) geeignet ist, ein durch die Antenne (56) empfangenes und mindestens einer Reflexion ausgesetztes Signal durch Auswertung der Amplitudenfluktuationen dieses Signals durch Vergleichen der aus derselben Senderantenne (46) der Lenkungsvorrichtung (1) empfangenen Signale durch zwei Empfangsantennen (56), die in einem bekannten Abstand von dieser getrennt sind, zurückzuweisen.

9. Flugobjekt (2) nach einem der vorhergehenden Ansprüche, **dadurch gekennzeichnet, dass** die Mittel zur Berechnung des Lenkungsmoduls dazu geeignet sind, Parameter der Höhen- und Azimutwinkelortung des Flugobjekts (2) zu berechnen, durch Bestimmung der Winkelabweichungen zweier Ebenen anhand der durch die Empfangsantennen (56) empfangenen Signale aus den verschiedenen elektromagnetischen Strahlenbündeln (21,22) der Lenkungsvorrichtung (1), nach dem Zurückzuweisen der durch mindestens eine Reflexion gestörten Signale.

10. Flugobjekt (2) nach einem der vorhergehenden Ansprüche, **dadurch gekennzeichnet, dass** die Mittel zur Berechnung geeignet sind, die Doppler-Frequenz des Flugobjekts (2) zu berechnen und die dieser Doppler-Frequenz entsprechende Doppler-Geschwindigkeit im Zeitverlauf zu integrieren, zur Berechnung des durch das Flugobjekt (2) zurückgelegten radialen Abstands.

11. Flugobjekt (2) nach einem der vorhergehenden Ansprüche, **dadurch gekennzeichnet, dass** die Mittel zur Berechnung geeignet sind, die Rollgeschwindigkeit und den Rollwinkel des Flugobjekts (2) zu berechnen, in Abhängigkeit von der Zeit, durch Vergleichen des Amplituden der durch die mindestens eine Empfangsantenne (56) empfangenen Signale gemäß zwei unterschiedlichen orthogonalen Polarisationen.

12. Flugobjekt (2) nach Anspruch 11, **dadurch gekennzeichnet, dass** die Mittel zur Berechnung geeignet sind, die Winkelposition der Antennen (56) in Rotation durch Interferometrie zur Beseitigung der Unbestimmtheit der Rollposition des Flugobjekts (2) zu berechnen.

13. Flugobjekt (2) nach Anspruch 11, **dadurch gekennzeichnet, dass** die Mittel zur Berechnung geeignet sind, die Entwicklung der Amplitude der durch die mindestens eine Antenne (56) empfangenen Signale im Zeitverlauf zur Beseitigung der Unbestimmtheit der Rollposition des Flugobjekts (2) zu berechnen.

14. Flugobjekt (2) nach Anspruch 11, **dadurch gekennzeichnet, dass** es einen Magnetometer- oder Beschleunigungsmessersensor umfasst, und dass die Mittel zur Berechnung geeignet sind, die Unbestimmtheit der Rollposition des Flugobjekts (2) mittels des durch den Sensor ausgegebenen Signals zu beseitigen.

15. Flugobjekt (2) nach einem der vorhergehenden Ansprüche, **dadurch gekennzeichnet, dass** seine Flugbahn geradlinig verläuft.

16. Flugobjekt (2) nach einem der Ansprüche 1 bis 14, **dadurch gekennzeichnet, dass** seine Flugbahn ballistisch und dann geradlinig verläuft, wobei die Lenkung des Flugobjekts (2) auf dem geradlinigen Teil der Flugbahn erfolgt.

**Claims**

1. Object which flies (2) in the direction of a target (3) and which is capable of being guided by a guiding device (1) on electromagnetic beams,
the guiding device (1) comprising an aiming means which is capable of identifying a target (3), at least three transmission antennae (46) and at least two transmitters, the transmission antennae (46) being capable of transmitting a group of beams compusing at least three separate electromagnetic guiding beams in different planes, the group of beams being centred about a targeting axis (35) and each beam being coded differently in order to enable the location of the flying object (2) assembly inside the beams,
the flying object (2) comprising a fuselage (52), at least one guiding fin (54) around said fuselage (52), said guiding fin (54) extending via an axis which is substantially perpendicular to the revolution axis of the fuselage (52), the object (2) comprising at least two receiving antennae (56) which are orientated in accordance with an axis which is substantially perpendicular to the revolution axis of the fuselage (52) of the flying object (2) and which is capable of receiving a signal of the guiding device (1) originating from the rear of the flying object (2), a receiving module which is connected to the at least one antenna (56), a control module which is connected to the receiving device and which is capable of orientating the guiding fin(s) (54), the receiving module transmitting to the control module signals which are representative of the trajectory correction which is intended to be carried out in accordance with the signals received by the at least one antenna (56) and in that the calculation means of the control module are capable of calculating the location parameters of the flying object (2) by carrying out a separation by means of adaptive filtering of the signals received by the at least one receiving antenna (56) originating from each beam of the guiding device (1), then by weighting of the amplitudes or the phases of these signals,

the object (2) being **characterised in that** the control module is capable of detecting and measuring the frequencies of the signals received by the receiving antennae (56) by means of auto-transposition, each transmitter of the guiding device (1) compusing a wave shape generator which supplies a signal to each of the transmission antennae (46) in accordance with a different coding.

2. Flying object (2) according to claim 1, **characterised in that** the receiving module operates in accordance with a millimetre wavelength, the group of at least one transmitter of the guiding device (1) operating in accordance with a millimetre wavelength.

3. Flying object (2) according to one of the preceding claims, **characterised in that** it has two receiving antennae (56) which are arranged in a diametrically opposed manner around the fuselage (52), each antenna being capable of receiving a polaused wave in accordance with the same rectilinear polarisations, each transmitter of the guiding device (1) generating electromagnetic beams in accordance with a rectilinear polarisation.

4. Flying object (2) according to either claim 1 or claim 2, **characterised in that** it has four receiving antennae (56), each of them being arranged around the fuselage (52) substantially perpendicular in pairs and each pair of diametrically opposed antennae being capable of receiving a polarised wave in accordance with the same rectilinear polarisation, each transmitter of the guiding device (1) generating electromagnetic beams in accordance with a rectilinear polarisation.

5. Flying object (2) according to one of the preceding claims, **characterised in that** the antenna(ae) is/are mounted on the rear of the guiding fin(s) (54).

6. Flying object (2) according to one of the preceding claims, **characterised in that** the antennae (56) are arranged around the fuselage (52) so that the signal received by at least one of them has not been subjected to reflections on at least one obstacle, the fuselage (52) of the flying object (2) acting as a mask, for the signal which has been subjected to at least one reflection, between the at least one antenna (56) and the at least one obstacle.

7. Flying object (2) according to one of the preceding claims, **characterised in that** the receiving module of said flying object (2) is capable of rejecting a signal which is received by an antenna (56) and which has been subjected to at least one reflection by analysing the fluctuations of the amplitude of this signal over time.

8. Flying object (2) according to one of the preceding claims, **characterised in that** the receiving module of said flying object (2) is capable of rejecting a signal which is received by an antenna (56) and which has been subjected to at least one reflection by analysing the fluctuations of the amplitude of this signal by comparing the signals received from the same transmission antenna (46) of the guiding device (1) by two receiving antenna (56) which are separated from each other by a known distance.

9. Flying object (2) according to one of the preceding claims, **characterised in that** the calculation means of the control module are capable of calculating the angular location parameters in elevation and in azimuth of the flying object (2) by means of deviation measurement of two planes from the signals received by the receiving antennae (56) originating from the different electromagnetic beams (21, 22) of the guiding device (1), after rejection of the signals disturbed by at least one reflection.

10. Flying object (2) according to one of the preceding claims, **characterised in that** the calculation means are capable of calculating the Doppler frequency of the flying object (2) and integrating the Doppler speed which corresponds to this Doppler frequency over time in order to calculate the radial distance travelled by the flying object (2).

11. Flying object (2) according to one of the preceding claims, **characterised in that** the calculation means are capable of calculating the rolling speed and the rolling angle of the flying object (2), in accordance with time, by means of comparison of the amplitudes of the signals received by the at least one receiving antenna (56) in accordance with two different orthogonal polarisations.

12. Flying object (2) according to claim 11, **characterised in that** the calculation means are capable of calculating the angular position of the antennae (56) in terms of rotation by means of interferometry in order to resolve the indetermination of the rolling position of the flying object (2).

**13.** Flying object (2) according to claim 11, **characterised in that** the calculation means are capable of calculating the development of the amplitude of the signals received by the at least one antenna (56) over time in order to resolve the indetermination of the rolling position of said flying object (2).

**14.** Flying object (2) according to claim 11, **characterised in that** it comprises a sensor of the magnetometer or accelerometer type, and **in that** the calculation means are capable of resolving the indetermination of the rolling position of the flying object (2) as a result of the signal supplied by said sensor.

**15.** Flying object (2) according to one of the preceding claims, **characterised in that** the trajectory thereof is rectilinear.

**16.** Flying object (2) according to one of claims 1 to 14, **characterised in that** the trajectory thereof is ballistic then rectilinear, the guiding of the flying object (2) being carried out over the rectilinear portion of said trajectory.

FIG.1a

FIG.1b

Ouverture de lobe à 3dB

Recouvrement des
lobes à 50%

FIG.2

41

Pilote

43  44  45  F1  46

43  44  45

46

F2

46

F4

43  44  45

43  44  45

F3  46

Oscillateur contrôlé
en fréquence et
en phase (DDS)  42

FIG.4

FIG.3a

FIG.3b

56

Direction de réception
des ondes

52

53

51

**FIG.5a**

(1)  54

54

52

(4)  (2)

54

Canards de guidage

54

(3)

**FIG.5b**

63  62  61

$\vec{E}$

Calculateur
de
mesure
et de
commandes

Récepteur(s)

Sélecteur

4/1 ou 4/4

$\vec{H}$

56

Circuit de
contrôle de
Sélection

65

Canard(s) de
changement
de direction

64

**FIG.6**

EP 2 639 596 B1

FIG.7

FIG.8

23

FIG.9

FIG.10

trajets directs

antenne i

1

Axe de la
trajectoire

Fi

antenne i+2

Fi+2

sol

trajet réfléchi

## FIG.11a

52

antenne i          antenne i+3

Axe de la
trajectoire

antenne i+2

trajet réfléchi
sur le sol

antenne i+1

trajet réfléchi
sur le sol

sol

## FIG.11b

FIG.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7193556 B

- US 5344099 A